# EUROPÄISCHE PATENTANMELDUNG

(11) **EP 1 710 281 A2**
(43) Veröffentlichungstag der Anmeldung: **11.10.2006**
(21) Anmeldenummer: 06111495.5
(22) Anmeldetag: 21.03.2006
(51) Int. Cl.: C09B 62/44, C09B 62/515, C09B 62/095

(54) **Wasserlösliche faserreaktive Farbstoffe, Verfahren zu ihrer Herstellung und ihre Verwendung**

(30) Priorität: 26.03.2005 DE 102005013959
(71) Anmelder: DyStar Textilfarben GmbH & Co. Deutschland KG, 65926 Frankfurt am Main (DE)
(72) Erfinder: Görlitz, Gunter, 65843, Sulzbach (DE); Russ, Werner, 65439, Flörsheim-Wicker (DE)

(57) **Zusammenfassung**

Die vorliegende Erfindung betrifft Farbstoffe der allgemeinen Formel (1): 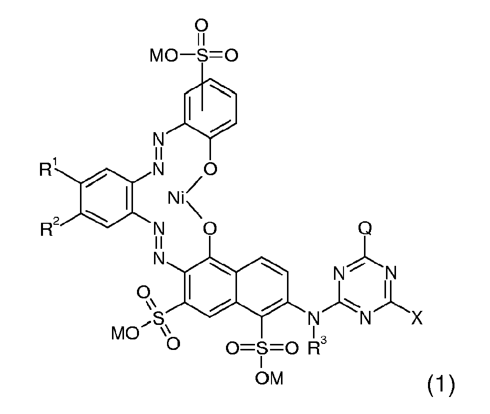 worin R¹ bis R³, M, X und Q wie in Anspruch 1 angegeben definiert sind, Verfahren zu ihrer Herstellung, sowie ihre Verwendung.

## Beschreibung

Die Erfindung liegt auf dem technischen Gebiet der faserreaktiven Azofarbstoffe.

Die Offenlegungsschrift DE-A 3516667 beschreibt grüne bis olivfarbige Metallkomplexfarbstoffe zur Verwendung als Reaktivfarbstoffe für Baumwolle, Wolle oder Polyamid. Diese besitzen jedoch gewisse anwendungstechnische Mängel, wie beispielsweise eine zu große Abhängigkeit der Farbausbeute von wechselnden Färbeparametern im Färbeprozess oder einen ungenügenden oder unegalen Farbaufbau auf Baumwolle. Ein guter Farbaufbau bezeichnet die Fähigkeit eines Farbstoffes, bei Anwendung erhöhter Farbstoffkonzentrationen im Färbebad die entsprechend farbstärkere Färbung zu liefern. Des weiteren zeigen diese Farbstoffe unbefriedigende Waschechtheiten und nur unbefriedigende Fixierausbeuten d. h. derjenigen Anteil an Farbstoff der auf der zu färbenden Ware dauerhaft fixiert ist, ist zu gering, insbesondere bei niedrigen Temperaturen.

Es ist jedoch aus ökologischen und ökonomischen Gründen wichtig, Farbstoffe bereitzustellen, die besonders hohe Fixierausbeuten haben, um den Anteil an nicht fixiertem Farbstoff im Färbereiabwasser möglichst gering zu halten. Auch sollten Farbstoffe möglichst unabhängig von wechselnden Färbeparametern, wie z.B. Färbetemperatur im Färbeprozess, stets gleichmäßig farbstarke Färbungen liefern. Ferner werden heutzutage größere Anforderungen an die Waschechtheit gestellt.

In der WO 02/08342 A1 werden Farbstoffe beschrieben, die die genannten Probleme weitgehend lösen, jedoch nicht den wünschenswerten Farbraum abdecken. Die Abdeckung des Farbraumes wird üblicherweise durch den Einsatz von Farbstoffmischungen erreicht, die aber im Vergleich zu monomolekularen Chromophoren oft eine starke Parameterabhängigkeit beim Färben aufweisen. Der Vorteil von monomolekularen Chromophoren liegt darin, dass auch bei einer Veränderung der Färbeparameter stets das gleich gefärbte Molekül auf die Faser aufzieht, wohingegen bei Mischungen aus mehren Farbstoffen verschiedene Farbstoffe bei verschiedenen Färbebedingungen verschieden gut aufziehen können und so jeweils verschiedene Farbtöne auf dem Substrat liefern können.

Mit der vorliegenden Erfindung wurde nunmehr gefunden, dass Farbstoffe der nachstehend definierten allgemeinen Formel (1) überraschenderweise deutlich bessere Waschechtheiten liefern als die in DE-A 3516667 beschriebenen. Zudem zeichnen sie sich durch höhere Fixierausbeuten und eine deutlich geringere Parameterabhängigkeit beim Färben aus. Sie lassen sich daher auch besser mit anderen Farbstoffen, die bei deutlich niedrigeren Temperaturen fixieren, kombinieren. Vor allem aber kann man mit den Farbstoffen der allgemeinen Formel (1) einen größeren Farbraum als mit den in DE-A 10035805 beschriebenen Farbstoffen abdecken.

Die Erfindung betrifft somit Farbstoffe der allgemeinen Formel (1): 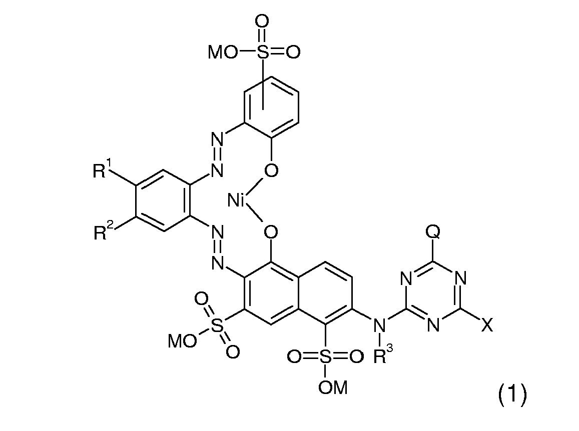 worin
- M: für Wasserstoff, ein Alkalimetall, das Äquivalent eines Erdalkalimetalls oder Ammonium steht;
- X: für Halogen, wie beispielsweise Fluor oder Chlor, C₁-C₄Alkoxy, wie zum Beispiel Methoxy oder Ethoxy, Amino, C₁-C₄-Alkylamino, N,N-(C₁-C₄)-Dialkyl-amino, wie beispielsweise N,N-Dimethylamino oder N,N-Diethylamino, Anilino oder ein mit ein oder zwei Sulfo- oder Hydroxy substituiertes Anilino steht oder eine Gruppe der Formel (a), (b) (c) oder (d) 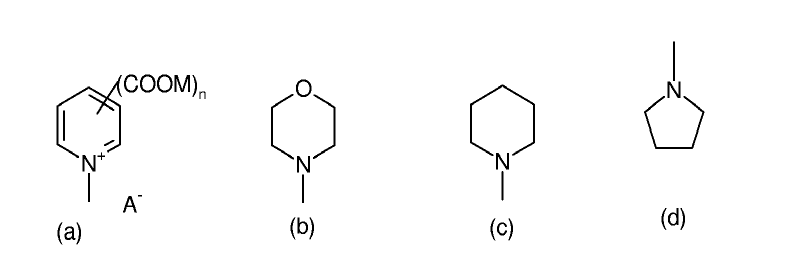 bedeutet, worin A⁻ Fluorid, Chlorid oder das Äquivalent eines Sulfations und n 1 oder 2 bedeutet;
- R¹ und R²: unabhängig voneinander für C₁-C₆ Alkyl, wie zum Beispiel Methyl, Ethyl, n-Propyl, i-Propyl, n-Butyl, i-Butyl, sec-Butyl, tert-Butyl, Pentyl oder Hexyl, C₁-C₆₋Alkoxy, wie zum Beispiel Methoxy, Ethoxy, Propyloxy oder Butyloxy, Chlor, C₁-C₄₋Alkylcarbonylamino, wie zum Beispiel Methylcarbonylamino, Ethylcarbonylamino, Propylcarbonyl-amino oder Butylcarbonylamino, Arylcarbonylamino, wie zum Beispiel Phenylcarbonylamino, stehen oder zusammen eine Gruppierung der Formel (f) oder (g) 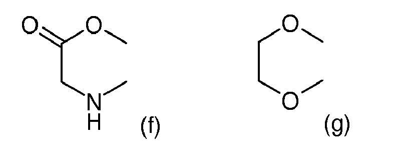 bilden;
- R³: für Wasserstoff oder C₁-C₆-Alkyl, wie zum Beispiel Methyl, Ethyl, n-Propyl, i-Propyl, n-Butyl, i-Butyl, sec-Butyl, tert.-Butyl, Pentyl oder Hexyl, steht;
- Q: für eine Gruppierung der Formel (e) 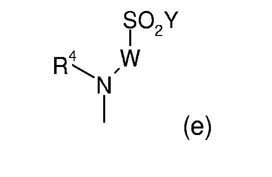 steht, worin
R⁴ eine der Bedeutungen von R³ hat oder für Phenyl oder durch Chlor oder Sulfo substituiertes Phenyl steht,
W für C₂-C₆-Alkylen steht, das durch 1 oder 2 Sauerstoffatome oder -NR⁵ unterbrochen sein kann, wobei R⁵ eine der Bedeutungen von R³ hat oder für Phenyl steht, und

Y für Vinyl oder eine Gruppierung der Formel CH₂CH₂Z steht, wobei Z eine durch Einwirkung von Alkali eliminierbare Gruppierung, wie zum Beispiel Chlor, -OSO₃M, - S₂O₃M, -OPO₃M₂,(C₂-C₅)-Alkanoyloxy, wie zum Beispiel Acetyloxy, Sulfobenzoyloxy, oder eine quaternäre Stickstoffgruppe ist, oder, falls X Fluor oder Chlor ist, eine Gruppe der Formel (a), (b), (c) oder (d) bedeutet.

Q steht besonders bevorzugt für eine Gruppe der Formel (e), wobei falls X Fluor oder Chlor ist, auch die Gruppen der Formeln (a) und (b) bevorzugt sind.
In der Gruppe der Formel (e) bedeuten bevorzugt R⁴ Wasserstoff oder Methyl, W Ethylen, Propylen oder 3-Oxopentyl, sowie Y Vinyl oder -CH₂CH₂OSO₃M. Bevorzugte Verbindungen der allgemeinen Formel (1) sind außerdem solche, in denen
- M: für Wasserstoff, Lithium, Natrium oder Kalium,
- X: für Fluor oder Chlor,
- R¹: für Methoxy,
- R²: für Methoxy und/oder
- R³: für Wasserstoff oder Methyl
steht.

Ganz besonders bevorzugte Verbindungen der allgemeinen Formel (1) sind solche, in denen M, X, R¹ bis R³ und Q die oben als bevorzugt bzw. besonders bevorzugt benannte Bedeutungen haben.

Somit sind ganz besonders bevorzugte Verbindungen der allgemeinen Formel (1) beispielsweise solche der allgemeinen Formel (1 a) 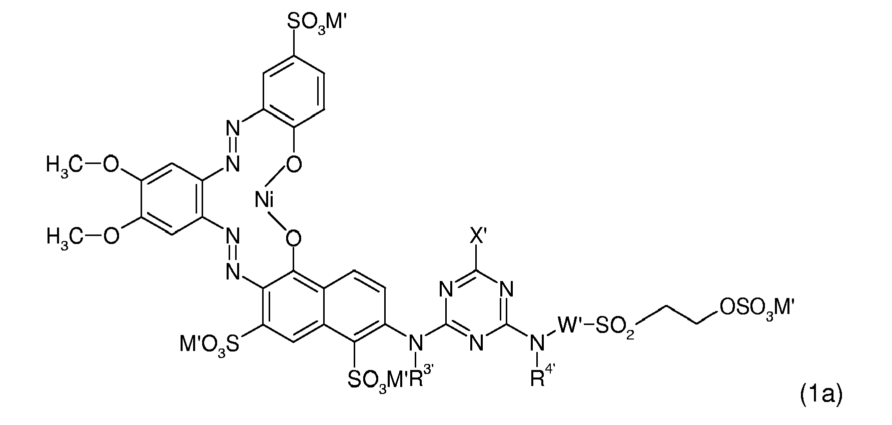 worin
M' Wasserstoff, Natrium oder Kalium;
X' Fluor oder Chlor und
R^{3'} und R^{4'} unabhängig voneinander Wasserstoff oder Methyl und
W' Ethylen, Propylen oder 3-Oxopentyl
bedeuten.

Erfindungsgemäße Farbstoffe der allgemeinen Formel (1), die einen Rest -SO₂Z enthalten, können bei sonst gleicher Struktur hinsichtlich der faserreaktiven Gruppe - SO₂Z unterschiedliche Struktur besitzen. Insbesondere kann bei sonst gleicher Struktur -SO₂Z zum einen -SO₂CH=CH₂ und zum anderen -SO₂CH₂CH₂Z, besonders bevorzugt β-Sulfatoethylsulfonyl, bedeuten. Dabei kann der Anteil des Farbstoffes in Vinylsulfonyl-Form bei bis zu etwa 95 Mol-%, bezogen auf den jeweiligen Farbstoffchromophor, liegen. Bevorzugt liegt der Anteil an Vinylsulfonyl-Farbstoff zu β-ethylsubstituiertem Farbstoff im Molverhältnis zwischen 5:95 und 95:5.

Die erfindungsgemäßen Farbstoffe der allgemeinen Formel (1) können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können zusätzlich die in Handelsfarbstoffen üblichen Hilfsmittel enthalten, wie Puffersubstanzen, die einen pH-Wert in wässriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im Allgemeinen liegen die erfindungsgemäßen Farbstoffe der allgemeinen Formel (1) als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 10 Gew.-%, bezogen auf das Farbstoffpulver enthalten. Sofern die erfindungsgemäßen Farbstoffe in wässriger Lösung vorliegen, beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffe der allgemeinen Formel (1) können aus geeigneten Vorstufen mittels der in der Farbstoffchemie üblichen Diazotierungs-, Kupplungs- und Metallierungsreaktionen, sowie Umsetzungen von Trihalogentriazinverbindungen mit geeignet substituierten Aminen aufgebaut werden. Dem Fachmann sind diese Methoden geläufig und sie sind in der einschlägigen Literatur erschöpfend beschrieben.

Beispielsweise kann man eine Verbindung der Formel (2) 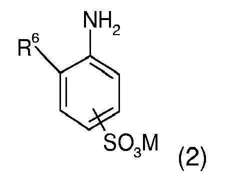 worin R⁶ Halogen, wie zum Beispiel Chlor oder C₁-C₄-Alkoxy, wie zum Beispiel Methoxy, bedeutet, diazotieren und auf eine Verbindung der Formel (3) 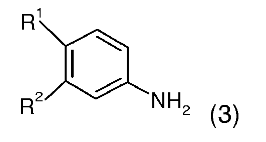 kuppeln, die erhaltene Verbindung der Formel (4) 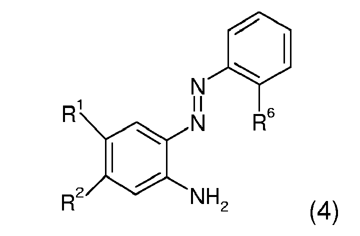 erneut diazotieren und auf eine Verbindung der Formel (5) 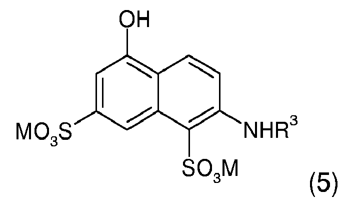 kuppeln, sodann die erhaltenen Verbindung der Formel (6) 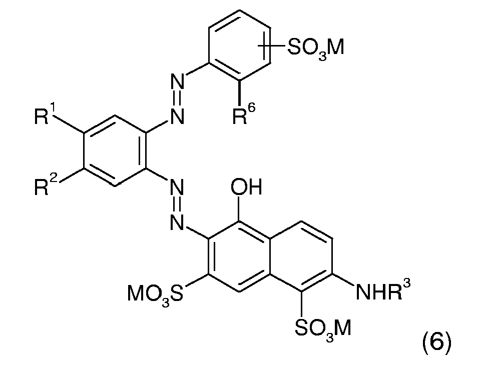 mit einer geeigneten Nickelverbindung zum Chromophor der Formel (7) 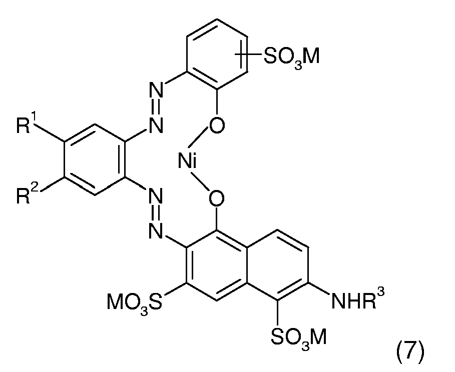 umsetzt, das dann mit einem Trihalogentriazin der Formel (8) 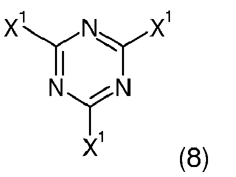 worin X¹ für Halogen steht, zur Verbindung der Formel (9) 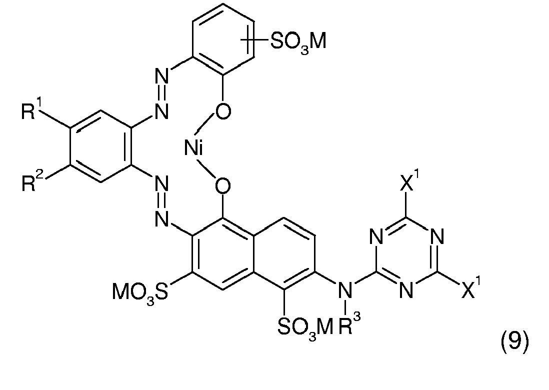 und anschließend mit einer Verbindung der Formel H-Q zum Farbstoff der allgemeinen Formel (1) umgesetzt wird, wobei für den Fall, dass X nicht für Halogen steht, die erhaltene Verbindung noch mit einer Verbindung H-X (mit X ungleich Halogen) umgesetzt werden muss.

Die Metallisierung kann alternativ zum oben beschriebenen Verfahren auch so erfolgen, dass man die Verbindung der Formel (4) diazotiert, sodann eine geeignete Nickelverbindung zugibt und die Kupplung auf die Verbindung der Formel (5) in Gegenwart von Ammoniak durchführt, wodurch, bevorzugt durch anschließendes Erhitzen, die Verbindung der Formel (7) direkt zugänglich ist.

Die Diazotierungsreaktionen erfolgen vorteilhafterweise mit Natriumnitrit in wässriger Salzsäure.
Geeignet Nickelverbindungen sind beispielsweise Nickelsalze wie Nickelchlorid, Nickelsulfat und Nickelsulfat-Hexahydrat. Die Umsetzung mit den genannten Nickelsalzen erfolgt bevorzugt in Gegenwart von Ammoniak bei einer Temperatur von 80 bis 100°C.
Die Umsetzung der Verbindung der Formel (7) mit dem Halogentriazin der Formel (8) erfolgt bevorzugt in neutralem oder schwach sauren Medium bei einer Temperatur von etwa 0 °C.
Die Abscheidung und Isolierung der erfindungsgemäßen Verbindungen der allgemeinen Formel (1) aus den wässrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung mittels Filtration zu entfernen.

Die erfindungsgemäßen Farbstoffe der allgemeinen Formel (1) besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen der erfindungsgemäßen Farbstoffe, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffe zum Färben oder Bedrucken dieser Materialien bzw. Verfahren zum Färben oder Bedrucken solcher Materialien in an und für sich üblichen Verfahrensweisen, bei welchen man erfindungsgemäße Farbstoffe als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffe der allgemeinen Formel (1) lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.
So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Waschechtheiten. Man färbt bevorzugt in wässrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen der Farbstoffe beschleunigenden Neutralsalze können dem Bade gegebenenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der erfindungsgemäßen Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die Cellulosefärbungen zeigen nach der üblichen Nachbehandlung durch Spülen zur Entfernung von nicht fixierten Farbstoffanteilen sehr gute Farbstoffeigenschaften und liefern nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke grün- bis olivfarbige Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus. Besonders vorteilhaft ist die gute Waschechtheit der Färbungen der hohe Fixierwert sowie die geringe Temperaturabhängigkeit gegenüber dem Stand der Technik.

Des Weiteren können die erfindungsgemäßen Farbstoffe auch für das faserreaktive Färben von Wolle Verwendung finden. Auch lässt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Coloirists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So werden beispielsweise die erfindungsgemäßen Farbstoffe bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 angehoben, um besonders zur Erzielung von hohen Farbtiefen die volle reaktive Bindung zwischen den erfindungsgemäßen Farbstoffen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffe sehr gut ist, lassen sie sich auch mit Vorteil bei üblichen kontinuierlichen Färbeverfahren einsetzen. Die erfindungsgemäßen Farbstoffe liefern auf den genannten Materialien grüne bis olivfarbige Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Die in den Beispielen formelmäßig beschriebenen Verbindungen sind teilweise in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

a) 20,3 Teile 3-Amino-4-methoxybenzolsulfosäure werden in 100 Teilen Wasser neutral gelöst, mit 30 Teilen konz. Salzsäure und 30 Teilen Eis versetzt. Unter Rühren gibt man 6,9 Teile Natriumnitrit in 100 Teilen Wasser hinzu und rührt 60 Minuten nach. Überschüssiges Nitrit wird mit Amidosulfonsäure zerstört. Man gibt 15,3 Teile 3,4-Dimethoxyanilin hinzu und stellt den pH-Wert im Verlauf von 2 Stunden mit 10 %iger Sodalösung auf 4,0. Der ausgefallene Farbstoff wird abgesaugt.
b) Der unter a) hergestellte Farbstoff wird neutral gelöst, mit 6,9 Teilen Natriumnitrit versetzt und unter gutem Rühren zu einer Mischung aus 180 Teilen Eiswasser und 30 Teilen konz. Salzsäure getropft. Man rührt 60 Minuten nach und zerstört überschüssiges Nitrit mit Amidosulfonsäure. Zu der erhaltenen Reaktionsmischung werden 27 Teile Nickelsulfat-hexahydrat gegeben. Die so erhaltene Reaktionsmischung gibt man zu einer Lösung aus 31 Teilen 5-Hydroxy-1 ,7-disulfo-2-naphthylamin und 65 Teilen 25%iger Ammoniaklösung in 500 Teilen Eiswasser.
c) Die in b) erhaltene Reaktionslösung wird 1-3 Stunden auf 80-100 °C erwärmt. Anschließend wird der Farbstoff durch Salzzugabe bei Raumtemperatur isoliert. Man erhält den Chromophor der Formel (7a)

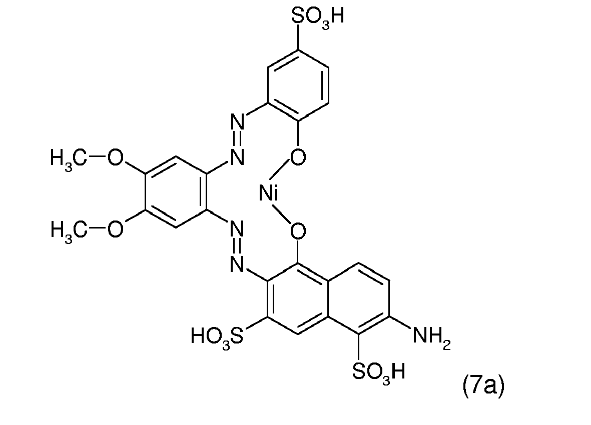

Die Verbindung der Formel (7a) lässt sich auf ähnliche Weise auch durch Einsatz von 3-Amino-4-chlorobenzolsulfosäure herstellen.
Die Verbindung der Formel (7a) wird neutral gelöst und durch Druckpermeation entsalzt.
d) Die unter c) hergestellte Verbindung der Formel (7a) wird neutral gelöst und unter gutem Rühren bei 0°C mit 34,4 Teilen Trifluortriazin versetzt, wobei pH 5 mit 20% iger Natronlauge gehalten wird. Die so erhaltene Verbindung der Formel (9a) 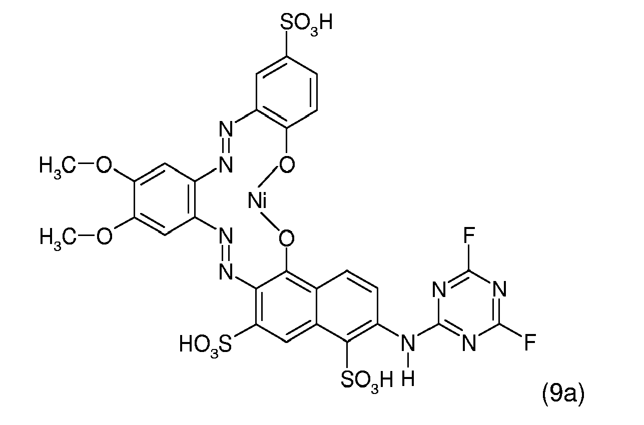 wird nach 10 Minuten mit einer Lösung von 15 Teilen N-Methyl-N-(2-β-Sulfatoethyl-sulfonyl)ethylamin versetzt, wobei pH 6 mit 20%iger Natriumhydroxidlösung gehalten wird. Anschließend lässt man das Reaktionsgemisch auf Raumtemperatur kommen. Durch Salzzugabe wird der erfindungsgemäße Farbstoff der allgemeinen Formel (1 b) isoliert.

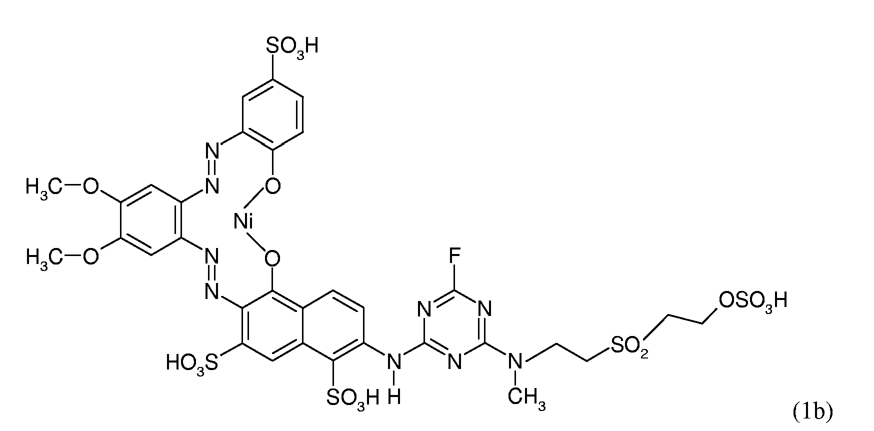

### Beispiel 2

Die gemäß Beispiel 1 hergestellte Verbindung der Formel (7a) wird neutral in 100 Teilen Wasser gelöst und bei 20-40 °C mit 18,5 g Trichlortriazin zur Verbindung der Formel (9b) 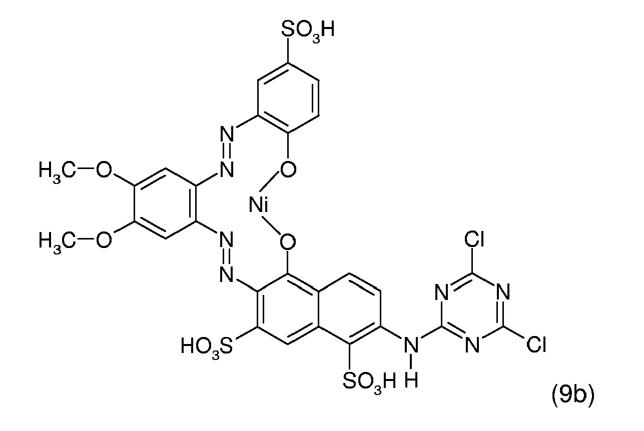 umgesetzt. Der pH-Wert der Reaktionsmischung wird durch Zugabe10%iger Sodalösung gehalten. Anschließend gibt man 18 Teile des Amins der Formel 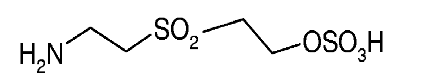 hinzu. Die erhaltene Farbstofflösung wird durch Membranentsalzung aufkonzentriert und sprühgetrocknet.Man erhält den erfindungsgemäßen Farbstoff der Formel (1 c)

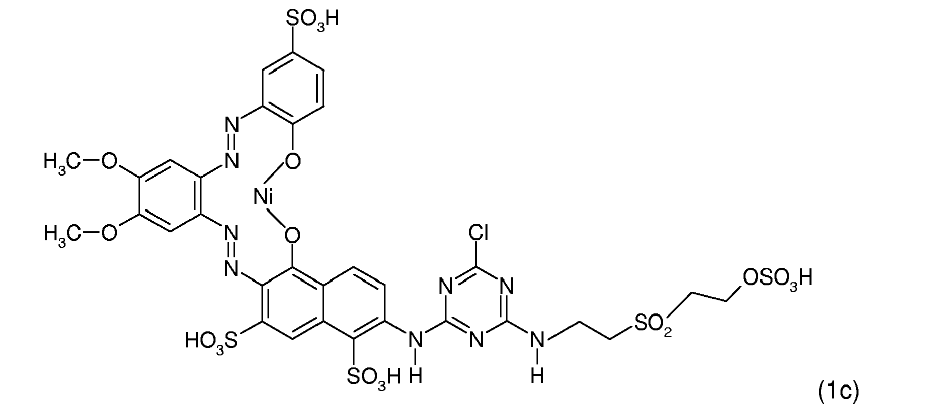

### Beispiel 3

Der Farbstoff der Formel (1 c) gemäß Beispiel 2 wird in Wasser gelöst, bei 0°C mit 20%iger Natronlauge auf pH 11 gestellt und sodann mit 31 %iger Salzsäure auf pH 7 gestellt. Man erhält den erfindungsgemäßen Farbstoff der Formel (1 d)

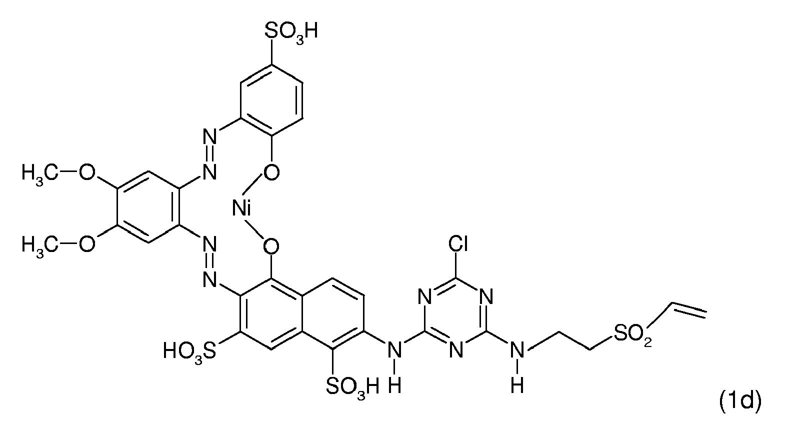

### Beispiel 4

Farbstoff (1 b) gemäß Beispiel 1 wird neutral in Wasser gelöst, bei 0°C mit 20%iger Natronlauge auf pH 11 gestellt, 30 Minuten gerührt und sodann mit 31 %iger Salzsäure auf pH 7 gestellt. Man erhält den erfindungsgemäßen Farbstoff der Formel (1 e)

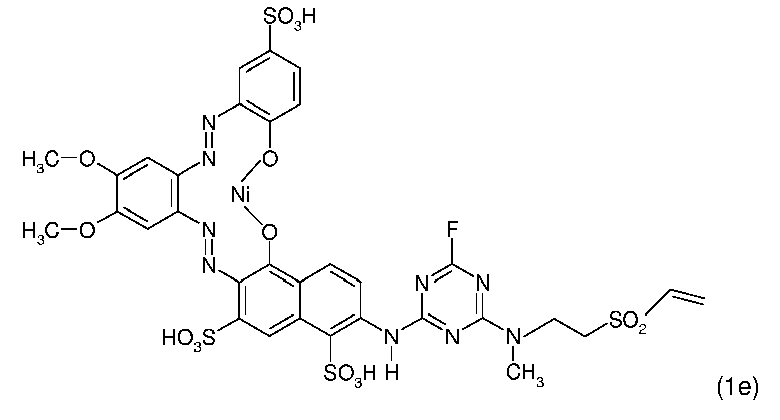

### Beispiel 5

Gemäß den Angaben in vorstehenden Beispielen 1 bis 4 kann auch der erfindungsgemäße Farbstoff der Formel (1 f) hergestellt werden.

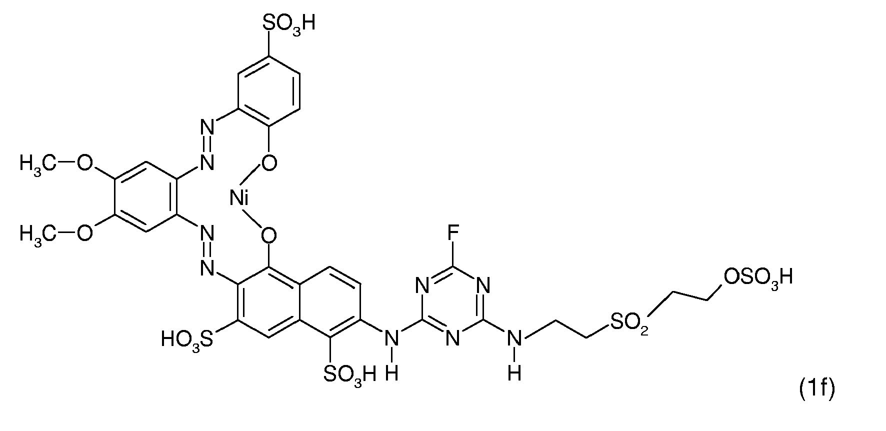

### Beispiel 6

Gemäß den Angaben in vorstehenden Beispielen 1 bis 4 kann auch der erfindungsgemäße Farbstoff der Formel (1 g) hergestellt werden.

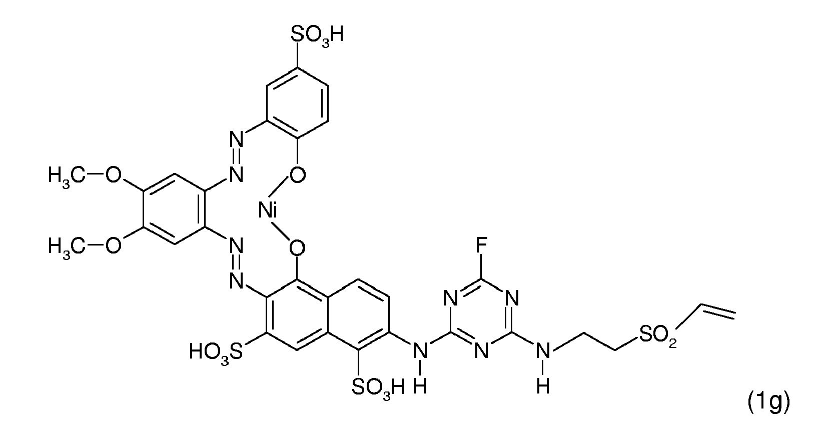

### Beispiel 7

2 Teile des Farbstoffes der Formel (1 e) gemäß Beispiel 4 werden in 400 Teilen Wasser gelöst. Man gibt 20 Teile Kochsalz, 8 Teile Soda und 20 Teile Baumwollgewebe hinzu, und erwärmt in einem Färbeapparat in 25 Minuten auf 60°C. Bei dieser Temperatur wird 60 Minuten gefärbt. Das Baumwollgewebe wird anschließend mit Wasser und verdünnter Essigsäure gespült und getrocknet. Man erhält eine grüne Färbung mit guter Lichtechtheit.

## Patentansprüche

1. Farbstoff der allgemeinen Formel (1) 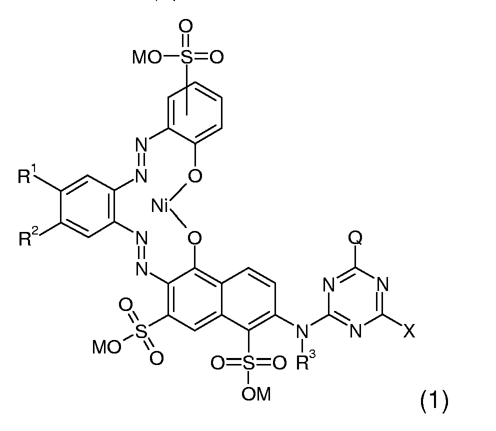 worin
M für Wasserstoff, ein Alkalimetall, das Äquivalent eines Erdalkalimetalls oder Ammonium steht;
X für Halogen, C₁-C₄Alkoxy, Amino, C₁-C₄-Alkylamino, N,N-(C₁-C₄)-Dialkylamino, Anilino oder ein mit ein oder zwei Sulfo- oder Hydroxy substituiertes Anilino steht oder eine Gruppe der Formel (a), (b) (c) oder (d) 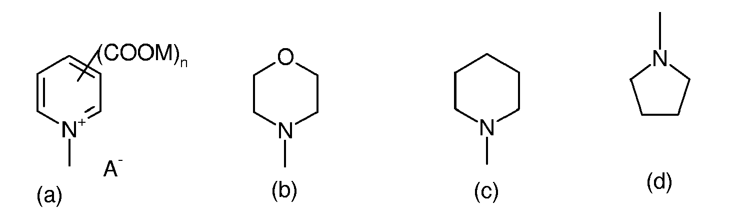 bedeutet, worin A⁻ Fluorid, Chlorid oder das Äquivalent eines Sulfations und n 1 oder 2 bedeutet;
R¹ und R² unabhängig voneinander für C₁-C₆ Alkyl, C₁-C₆-Alkoxy, Chlor, C₁-C₄₋Alkylcarbonylamino oder Arylcarbonylamino stehen oder zusammen eine Gruppierung der Formel (f) oder (g) 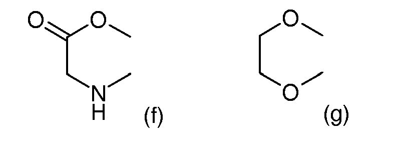 bilden;
R³ für Wasserstoff oder C₁-C₆-Alkyl steht;
Q für eine Gruppierung der Formel (e) 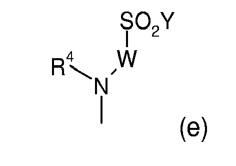
steht, worin
R⁴ eine der Bedeutungen von R³ hat oder für Phenyl oder durch Chlor oder Sulfo substituiertes Phenyl steht,
W für C₂-C₆-Alkylen steht, das durch 1 oder 2 Sauerstoffatome oder -NR⁵ unterbrochen sein kann, wobei R⁵ eine der Bedeutungen von R³ hat oder für Phenyl steht, und
Y für Vinyl oder eine Gruppierung der Formel CH₂CH₂Z steht, wobei Z eine durch Einwirkung von Alkali eliminierbare Gruppierung ist,
oder, falls X Fluor oder Chlor ist, eine Gruppe der Formel (a), (b), (c) oder (d) bedeutet.

2. Farbstoff nach Anspruch 1, **dadurch gekennzeichnet, dass**
M für Wasserstoff, Lithium, Natrium oder Kalium,
X für Fluor oder Chlor,
R¹ für Methoxy,
R² für Methoxy oder
R³ für Wasserstoff oder Methyl
steht.

3. Farbstoff nach Anspruch 1, **dadurch gekennzeichnet, dass**
M für Wasserstoff, Lithium, Natrium oder Kalium,
X für Fluor oder Chlor,
R¹ für Methoxy,
R² für Methoxy und
R³ für Wasserstoff oder Methyl
steht.

4. Farbstoff nach einem oder mehreren der Ansprüche 1 bis 3, **dadurch gekennzeichnet, dass** Q für eine Gruppe der Formel (e) steht.

5. Farbstoff nach Anspruch 4, **dadurch gekennzeichnet, dass** in der Gruppe der Formel (e) R⁴ Wasserstoff oder Methyl, W Ethylen, Propylen oder 3-Oxopentyl und Y Vinyl oder CH₂CH₂OSO₃M steht.

6. Farbstoff nach einem oder mehreren der Ansprüche 1 bis 3, **dadurch gekennzeichnet, dass** Q für eine Gruppe der Formel (a) oder (b) steht.

7. Farbstoff nach Anspruch 1, **dadurch gekennzeichnet, dass** der die Formel (1 a) aufweist 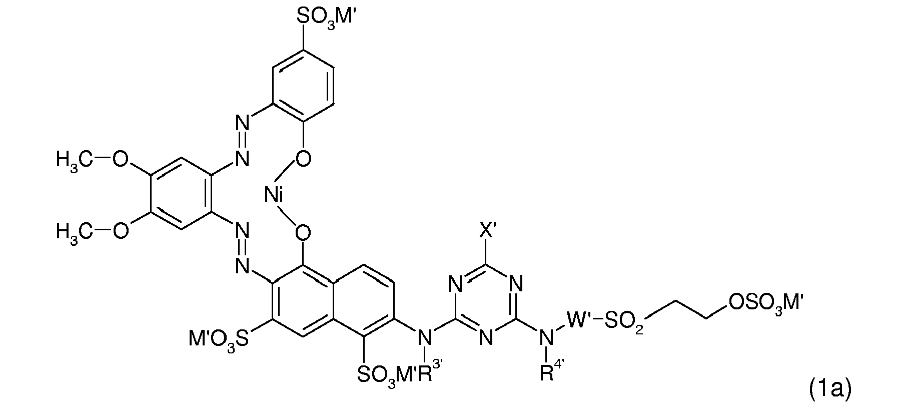 worin
M' Wasserstoff, Natrium oder Kalium;
X' Fluor oder Chlor und
R³' und R^{4'} unabhängig voneinander Wasserstoff oder Methyl und
W' Ethylen, Propylen oder 3-Oxopentyl
bedeuten.

8. Verfahren zur Herstellung einer Verbindung gemäß einem oder mehreren der Ansprüche 1 bis 7, **dadurch gekennzeichnet, dass** man eine Verbindung der Formel (2) 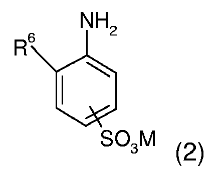 worin R⁶ Halogen oder C₁-C₄-Alkoxy bedeutet, diazotiert und auf eine Verbindung der Formel (3) 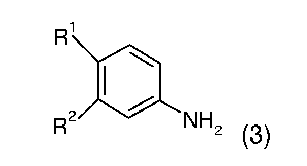 kuppelt, die erhaltene Verbindung der Formel (4) 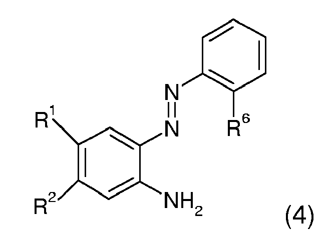 diazotiert und auf eine Verbindung der Formel (5) 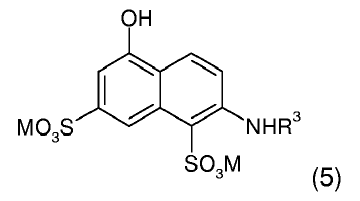 kuppelt, sodann die erhaltenen Verbindung der Formel (6) 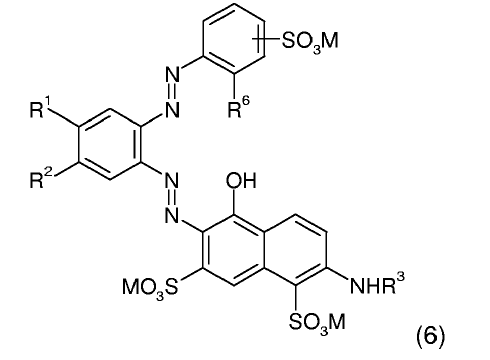 mit einer geeigneten Nickelverbindung zum Chromophor der Formel (7) 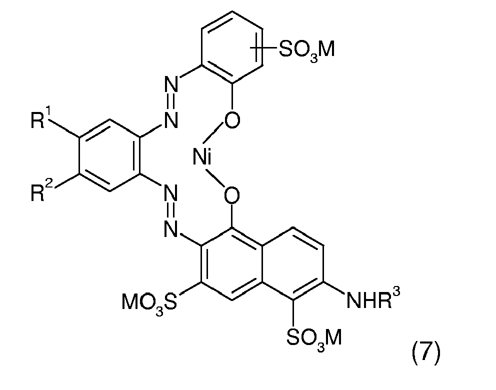 umsetzt, das dann mit einem Trihalogentriazin der Formel (8) 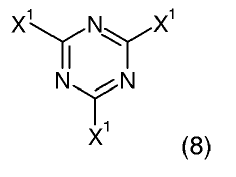 worin X¹ für Halogen steht, zur Verbindung der Formel (9) 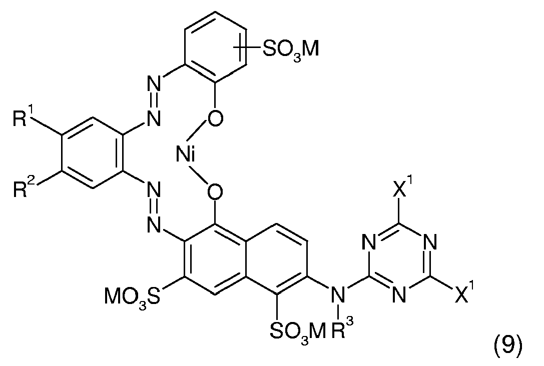 und anschließend mit einer Verbindung der Formel H-Q zum Farbstoff der allgemeinen Formel (1) umgesetzt wird, wobei für den Fall, dass X nicht für Halogen steht, die erhaltene Verbindung noch mit einer Verbindung H-X (mit X ungleich Halogen) umgesetzt wird.

9. Verwendung eines Farbstoffes gemäß einem oder mehreren der Ansprüche 1 bis 7 zum Färben oder Bedrucken von hydroxy- und/oder carbonamidgruppenhaltigem Materialien.

10. Hydroxy- und/oder carbonamidgruppenhaltiges Material, **dadurch gekennzeichnet, dass** es mit einem Farbstoff gemäß einem oder mehreren der Ansprüche 1 bis 7 gefärbt oder bedruckt ist.
